# EUROPEAN PATENT APPLICATION

(11) **EP 4 059 332 A1**
(43) Date of publication of application: **21.09.2022**
(21) Application number: 22161625.3
(22) Date of filing: 11.03.2022
(51) Int. Cl.: A01B 69/00, A01B 69/04

(54) **CONTROL METHOD FOR AN AGRICULTURAL TRACTOR AND AGRICULTURAL TRACTOR IMPLEMENTING THE METHOD**

(30) Priority: 17.03.2021 IT 202100006365
(71) Applicant: CNH Industrial Italia S.p.A., 10135 Torino (IT)
(72) Inventor: Cordioli, Matteo, 37019 Peschiera del Garda (VR) (IT); Giannotta, Gian Marco, 42121 Reggio Emilia (RE) (IT); Mantovani, Michele, 46026 Quistello (MN) (IT)
(74) Representative: CNH Industrial IP Department

(57) **Abstract**

Control method for a tractor (1) having a TIM control unit (7) that is designed to be electrically connected with an implement (2) and/or a with navigation system (8) through respective buses (9,10) and is designed to allow bidirectional exchange of control data; said TIM control unit (7) being designed to perform a Tractor Implement control Method for acting on electro-mechanical unities of the tractor and controlling tractor functions and steering automation based on signals provided by the implement (2) and/or navigation system (8). The method comprising the following steps: activating the TIM control and displaying (11) a specific indication (12) when the TIM technology control is active; disabling by the steering control unit (19) the steering automation when the speed the tractor (1) is zero or close to zero by opening a switch (16) supplying power to a solenoid valve (15) of an hydraulic system of the tractor (1), when steering automation is disabled the TIM automation is still active but in a limited manner; sensing the position of the switch and displaying (11) a specific indication (18) of limited steering automation once the solenoid valve is in an open position. (Figures 1 and 2)

## Description

### TECHNICAL FIELD

The present invention concerns a control method for an agricultural tractor using Tractor Implement Management technology in standstill condition and an agricultural tractor implementing the method.

### BACKGROUND OF THE INVENTION

According to Tractor Implement Management technology, a bi-directional data connection is established between one implement and a tractor through a dedicated bus. Control data arriving from the implement can control some functions of the tractor such tractor speed, start and stop of the tractor and steering of the tractor. In other words, the tractor controls the implement but also the implement may control some functions of the tractor. When the control of the tractor under TIM technology is active, such information is provided on a specific "TIM ON" icon that is shown on a display control of the tractor.

For instance, EP3501247B1 describes a method for controlling a driving condition for a tractor of agricultural machine comprising a tractor and an implement for applying a material. A weight sensor device having at least one weight sensor is configured to generate control signals for controlling driving conditions of the tractor.

In the prior art system, when the tractor in standstill (i.e. has a speed close to zero or zero), the tractor steering control unit disables steering control and the TIM automation is still active but in a limited manner. For instance the steering curvature cannot be modified by the TIM control due to safety reasons.

The solution available on the market do not provide the information of the unavailability of the steering automation because the "TIM ON" icon is shown in an unmodified manner also under the above conditions.

The scope of the present invention is to provide a secure indication to the driver that the steering automation is not effective so that increase the comfort and awareness of the user of the tractor.

### SUMMARY OF THE INVENTION

The aforementioned aim is reached by a control method for a tractor as claimed in claim 1.

The present invention also relates to a tractor as claimed in claim 3.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic representation of an agricultural tractor operating with an implement according to the method of the present invention in a first operative position; and
- Figure 2 is a schematic representation of the tractor of figure 1 in a second operative position.

### DETAILED DESCRIPTION OF THE INVENTION

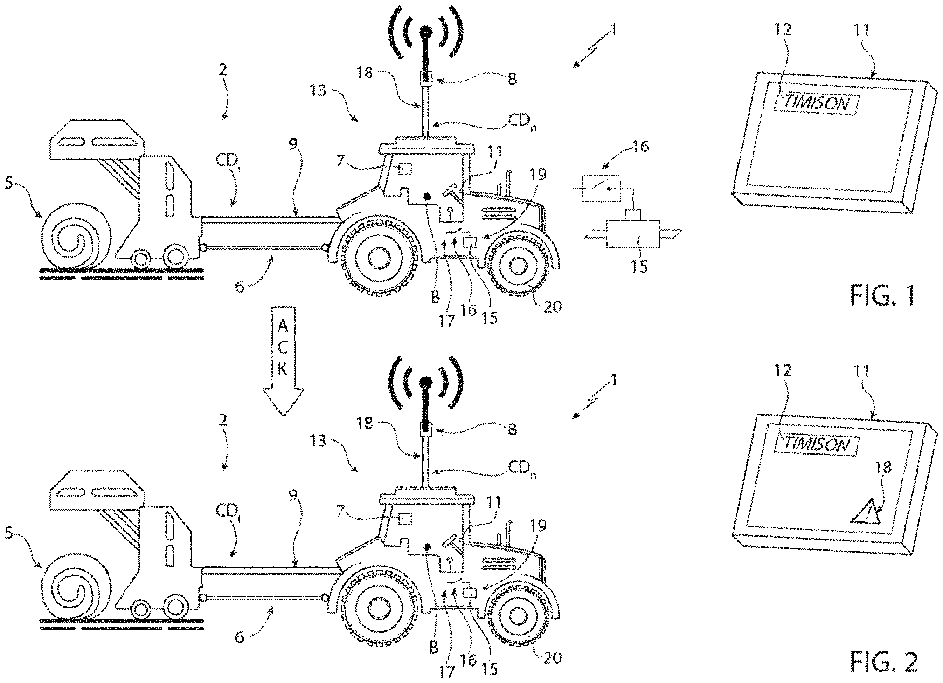

In figures 1 and 2, numeral 1 indicates an agricultural tractor (of a known kind and powered by an internal combustion engine) that is designed to be connected by one or more implement 2. In the example, just one implement 2 is shown. The implement 2 shown according to the example is a baler that is designed to collect hay, cotton or similar dry materials in order to compress collected materials and produce bales 5 of compressed materials, for instance of cylindrical shape. It is however clear that the implement 2 may be different from the one represented. The agricultural tractor 1 is mechanically connected by means of a towing bar 6 with the implement 2 that is typically powered by the torque produced by the engine of the tractor 1. The tractor 1 is provided with a Tractor Implement Management control unit 7 (of known kind) designed to be electrically connected with a number of sensors (not shown) of implement 2 and with a navigation systems 8 through respective buses 9 and 10 designed to allow bidirectional exchange of control data CDi CDn.

Each bus 9, 10 is an ISO standard, based on the ISO-11783 guidelines, developed to enable the interconnection and communication of tractor and implements built from different manufacturers in a plug-and-play fashion.

The TIM control unit 7 is designed to perform in a known manner a Tractor Implement Management for acting on electro-mechanical unities of the tractor (for instance powertrain, torque and speed control, etc.) and controlling functions of the tractor such as tractor speed, start and stop of the tractor and steering of the tractor based on control data CDi, CDn provided by the implement 7 and/or by the navigation system 8.

For instance, in the case of a baler 2, sensors are provided to produce control data CDi used for reducing the speed of the tractor once the bale 5 is ready to be released from the implement 2.

The tractor 1 is provided with a display unit 11 (of known kind for instance a LCD display represented in enlarged view in figure 1) in connection with the control unit 7 and designed to present a specific icon 12 when the TIM technology control is active.

According to the known TIM technique there is provided a main switch B placed on the armrest to provide an acknowledgment signal once at least one implement 2 is connected with the TIM control unit 7 through the respective bus 9. In fact, once the physical connections have been duly established the acknowledgment signal is generated indicating the presence of a good connection with data exchange of the implement with the TIM control unit 7.

The tractor 1 thus starts to perform a work (figure 1) with the towed implement 2 that controls in known way the functions of the tractor 1 according to the known TIM technology control based on control data CDi provided by the connected implement 2. During this work the icon 12 is continuously represented.

The navigation system 8 arranged in the tractor is also connected with the TIM control unit 7 through the respective bus 10 and the steering operation of the tractor are controlled by the navigation system 8 through a steering control unit 19.

The Steering control unit 19 is so designed when the speed the tractor 1 is zero or close to zero (i.e. in a standstill condition) to disable the steering control.

The above disabling operation is obtained by cutting off the power supply to a solenoid valve 15 of an hydraulic system (not shown) of the steering wheels 20. The cutting off is obtained by opening a switch 16 that energizes the solenoid valve 15. When the switch 16 is closed the solenoid valve 15 is activated and hydraulic fluid in pressure (oil for instance) is used to control the steering operation of the steering wheels 20.

When steering automation is disabled the TIM automation is still active but in a limited manner. For instance the steering curvature cannot be modified by the TIM control due to safety reasons.

According to the present invention, the position of the switch 16 is detected so that when the switch 16 is in the open position and the solenoid valve 15 is deactivated an indication by means of an icon 18 (figure 2) is provided to the display unit 11 so that the user knows that the steering automation is limited due to safety reasons even if the icon 12 is ("TIM IS ON") still present. Typically switch 16 position is sensed based on the current flow, if a current is present the switch is closed if no current is sensed the switch is open. Alternatively a position sensor (not shown) may be coupled with the switch 16.

From the above advantage of the invention are clear, specifically comfort and awareness of the user of the tractor is thus improved.

It is clear that modifications can be made to the described method which do not extend beyond the scope of protection defined by the claims.

## Claims

1. Control method for a tractor (1) having a TIM control unit (7) that is designed to be electrically connected with an implement (2) and/or a with navigation system (8) through respective buses (9,10) and is designed to allow bidirectional exchange of control data; said TIM control unit (7) being designed to perform a Tractor Implement control Method for acting on electro-mechanical unities of the tractor and controlling tractor functions such as tractor speed, start and stop of the tractor and steering automation of the tractor based on signals provided by the implement (2) and/or navigation system (8),
the method comprising the following steps:
activating said TIM control method and displaying (11) a specific indication (12) when the TIM technology control is active;
disabling by a steering control unit (19) the steering automation when the speed the tractor (1) is zero or close to zero by opening a switch (16) supplying power to a solenoid valve (15) of an hydraulic system of the tractor (1) acting on steering wheels (20), when steering automation is disabled the TIM automation is still active but in a limited manner; **characterized by** comprising the step of sensing the position of said switch and displaying (11) a specific indication (18) of limited steering automation once the solenoid valve is in an open position.

2. Control method as defined in claim 1, wherein the step of sensing the position of said switch comprises the step of sensing the flow of current through said switch (16).

3. Tractor (1) having a TIM control unit (7) that is designed to be electrically connected with an implement and/or with a navigation system (8) through respective buses (9,10) and is designed to allow bi-directional exchange of control data; said TIM control unit (7) being designed to perform a Tractor Implement control Method for acting on electro-mechanical unities of the tractor and controlling tractor functions such as tractor speed, start and stop of the tractor and steering automation of the tractor based on signals provided by the implement (2) and/or navigation system (8),
the tractor being provided with a main switch (B) to provide, once actuated, an acknowledgment signal indicating the presence of a good connection with data exchange of the implement with the TIM control unit (7); the TIM control unit (7) after acknowledgement controlling the functions of the tractor (1) based on control data CDi provided by the connected implement (2);
the tractor being provided with a display unit (11) to provide a specific indication (12) when the TIM technology control is active;
a steering control unit (19) being designed to disable the steering automation when the speed the tractor (1) is zero or close to zero by opening a switch (16) supplying power to a solenoid valve (15) of an hydraulic system of the tractor (1) acting on steering wheels (20), when steering automation is disabled the TIM automation is still active but in a limited manner,
**characterized by** comprising sensor means (17) detecting the position of said switch and causing the display unit (11) to provide (11) a specific indication (18) of limited steering automation once the solenoid valve is in an open position.

4. Tractor as defined in claim 2, wherein said sensor means (17) are designed to sense the current flow through said switch, if a current is present the switch is closed if no current is sensed the switch is open.
